## Europäisches Patentamt
## European Patent Office
## Office européen des brevets

(19)

(11) Veröffentlichungsnummer: **0 007 585**
**B1**

(12) # EUROPÄISCHE PATENTSCHRIFT

(45) Veröffentlichungstag der Patentschrift:
**05.08.81**

(21) Anmeldenummer: **79102550.5**

(22) Anmeldetag: **19.07.79**

(51) Int. Cl.³: **C 04 B 15/06, B 32 B 13/02,**
**C 04 B 35/22, C 04 B 43/00**

(54) **Verfahren zur Herstellung von feuerbeständigen massgenauen Leichtbauplatten.**

(30) Priorität: **21.07.78 DE 2832125**

(43) Veröffentlichungstag der Anmeldung:
**06.02.80 Patentblatt 80/3**

(45) Bekanntmachung des Hinweises auf die Patenterteilung:
**05.08.81 Patentblatt 81/31**

(84) Benannte Vertragsstaaten:
**AT BE CH FR GB IT LU NL SE**

(56) Entgegenhaltungen:
**AU-B-428 565**
**DE-A1-2 751 660**
**DE-B2-1 796 293**
**DE-B2-2 627 823**
**DE-C-1 012 857**
**FR-A1-2 364 872**
**US-A-3 352 699**

(73) Patentinhaber: **MINORA, Forschungs- und Entwicklungsgesellschaft für organische und anorganische Baustoffe, mit beschränkter Haftung Karlstrasse 59, D-4950 Minden (DE)**

(72) Erfinder: **Krämer, Walter, Uhlenkamp 1, D-3040 Soltau-Friedrichseck (DE)**
Erfinder: **Follmann, Heinrich, Alemannenstrasse 1, D-4950 Minden (DE)**

(74) Vertreter: **Beszédes, Stephan G., Dr., Am Heideweg 2 Postfach 1168, D-8060 Dachau (DE)**

Verfahren zur Herstellung von feuerbeständigen massgenauen Leichtbauplatten

Die Erfindung betrifft ein Verfahren zur Herstellung von feuerbeständigen massgenauen Leichtbauplatten auf der Grundlage von Calciumsilikaten (oder genauer Calciumsilikathydraten) mit einer alkalibeständigen Faserverstärkung.

Bei den vielen bekannten Verfahren zur Herstellung von Formkörpern auf der Basis der zur Bildung von C-S-H-Phasen geeigneten Massen, wie amorphen Siliciumdioxydformen (beispielsweise Diatomeenerde, gefällter Kieselsäure beziehungsweise pyrogener Kieselsäure) und kristallinem Siliciumdioxyd in Form von Quarzmehl unter Zusatz von Calciumoxyd in Form von gemahlenem gebranntem Kalk in stöchiometrischer Abstimmung für die zur Bildung von C-S-H-Phasen gültigen chemischen Erfordernisse, wird mit einem erheblichen Wasserüberschuss aufbereitet, wobei Faserstoffe verschiedenster Art in dieses Gemenge eingearbeitet werden. Die Aufbereitung dieser Stoffsysteme wird hierbei bei erhöhter Temperatur, vorwiegend im Temperaturbereich von 70 bis 95°C, durchgeführt, um die jeweils angestrebte optimale Wasserbindung in Form einer Gelstruktur zu erzielen. Die so aufbereiteten Massen haben entweder eine breiige oder eine pastenartige Konsistenz, je nach der Art der angestrebten Formgebung, die nach dem Stand der Technik in der Weise erfolgt, dass die breiartige Mischung in einzelne Formen eingefüllt wird, wobei entsprechend den Formenabmessungen grössere Blöcke gebildet werden, die dann nach der Autoklavenhärtung und anschliessenden Trocknung auf die jeweils gewünschten Produktmasse gesägt werden.

Ferner sind Verfahren, bei denen die pastenartige Masse in einem kontinuierlich arbeitenden Filterpressband zu einem plattenartigen Materialstrang geformt wird, bekannt. Hierbei wird der Materialstrang auf bestimmte Ablängungen unterteilt, auf Hordenpaletten umgesetzt und in üblicher Weise der Autoklavenhärtung unterzogen.

Diese letzteren Verfahren stellen gegenüber dem Blockgiessverfahren bereits einen gewissen Fortschritt dar, sind jedoch mit erheblichen Schwierigkeiten, insbesondere im Hinblick auf die Materialaufgabe sowie die Materialverteilung für die Durchführung des Pressarbeitsganges verbunden, da eine relativ dickbreiige Materialkonsistenz vorausgesetzt werden muss, um die jeweils gewünschte Plattendicke formen zu können.

Ein weiterer Nachteil dieser bekannten Verfahren besteht darin, dass der Pressdruck nicht gleichmässig im Bereich der kontinuierlichen Presstrecke einwirkt, wodurch Materialverschiebungen in der Weise entstehen, dass schichtenartige Abblätterungen sehr leicht entstehen können. Es werden also Platten, die in sich nicht homogen sind und bei denen eine nachträgliche Besäumung erforderlich ist, erhalten.

Insoweit erfordern diese bekannten Verfahren sowohl hochwertige Rohstoffe als auch einen erheblichen apparativen Aufwand. Produktionsanlagen dieser Art sind bisher nur zur Herstellung von Spezialprodukten, bei denen ein derartiger Aufwand vertretbar erscheint, geeignet.

Ferner ist aus der deutschen Offenlegungsschrift 2 356 942 ein Verfahren zur Herstellung von Formkörpern aus Calciumsilikathydrat, bei dem Calciumoxyd und ein quarzhaltiges Material in Gegenwart von Sattdampf unter hydrothermalen Bedingungen umgesetzt werden, so dass eine Calciumsilikathydrataufschlämmung gebildet wird, wonach diese Aufschlämmung zur Ausbildung der gewünschten Formkörper ausgeformt und getrocknet wird, wobei der Restquarzgehalt der Formkörper auf weniger als 7 Gew.-% gesenkt wird, bekannt. Es können auch Fasern zur Verstärkung und eine geringe Menge eines Bindemittels, zum Beispiel Bentonit, in einem Anteil von bis zu 3 Gew.-% zugesetzt werden.

Weiterhin ist in der kanadischen Patentschrift 793 215 ein Verfahren zur Herstellung von gelierten und gepressten Calciumsilikatwärmeisolierkörpern niedriger Dichte durch ½ bis 3 Stunden langes Erhitzen einer Kalk und Diatomeenerdensiliciumdioxyd enthaltenden verdünnten wässrigen Aufschlämmung auf Temperaturen von etwa 49 bis 99°C zu einem wasserhaltigen Calciumsilikathydratgelprodukt, Verfestigen sowie Formen und Entwässern des letzteren durch Formpressen in einer Filterformpresse und Dampfhärten des erhaltenen verfestigten und geformten Produktes unter weiterer Reaktion, wobei gegebenenfalls geringe Mengen von hydraulischen Bindemitteln, wie Portlandzement, und/oder Tonen, wie Bentonit, in Mengen von bis zu etwa 15 Gew.-% des Feststoffgehaltes zugesetzt werden können, beschrieben. Auch bei beiden letztgenannten Verfahren wird die Umsetzung vor dem Formen (Vorreaktion), soweit eine solche überhaupt stattfindet, bei durch äussere Wärmeanwendung erhöhter Temperatur durchgeführt. Dies hat aber abgesehen vom erforderlichen zusätzlichen Energieaufwand den erheblichen Nachteil, dass die für die Verarbeitung zur Verfügung stehende Zeitdauer kurz ist, da in der Regel bei erhöhter Temperatur die Materialkonsistenz sehr stark ansteigt und entsprechende Probleme bei der Verarbeitung in Pressen herbeiführt, so dass die Dauer der Zwischenlagerung sehr begrenzt ist. Andererseits war es mit den nach den bekannten Verfahren verwendeten Ausgangsmaterialien nicht möglich, durch eine Vorreaktion ohne äussere Wärmeanwendung zu brauchbaren Produkten zu gelangen.

Weiterhin ist aus der deutschen Patentschrift 1 012 857 ein Verfahren zur Herstellung von porösen Produkten niedriger Dichte in dem System $CaO-SiO_2-H_2O$ aus wässrigen Suspensionen von feinzerteiltem reaktionsfähigem Kalk und Siliciumdioxyd im Molverhältnis des ersteren zum letzteren von etwa 1:1, bei welchem der wässrige Schlamm von reaktionsfähigem feinzerteiltem Kalk und Siliciumdioxyd durch Zusatz von wasserhaltigem Calciumsilikat von latten- oder schuppenähnlicher Kristallform und fast kolloidaler Grösse, welches auch bereits reagiertes synthetisches Calciumsilikat von einem Molverhältnis von CaO zu $SiO_2$ von 1:1 sein kann, als Suspendierungsmittel stabilisiert wird, wobei das Volumenverhältnis von Flüssigkeit zu Festanteilen in der Suspension auf mehr als 1:1 bemessen wird, und die suspendierten reaktionsfähigen Feststoffe Kalk und Siliciumdioxyd in der Weise miteinander in Reaktion gebracht werden, dass die Suspension Temperaturen über 175°C und Drücken über 9 ata unterworfen wird, bekannt. Eine Vorreaktion ist nicht vorgesehen, die Suspension in heissem Wasser von 66 bis 79°C wird vielmehr nach dem vollständigen Durchmischen dem Autoklavenhärten bei Temperaturen über 175°C und Drücken über 9 ata unterworfen. So kann aber ein langsamer Gelaufbau mit den daraus sich ergebenden vorteilhaften Produkteigenschaften nicht vor sich gehen. Auch ist von der Verwendung von Faserstoffen keine Rede. Die Aufgabe des Verfahrens dieser Druckschrift ist nicht die Herstellung von plattenförmigen Formkörpern in einer Dicke ab 10 mm und kann es auch nicht sein. Unter vollständigem Durchmischen des angegebenen Ansatzes gemäss der genannten Druckschrift ist die Mindestzeiteinheit, die zur Herstellung einer homogenen Mischung erforderlich ist, zu verstehen. Dabei wird, um in einer solchen Mischung zum Beispiel Entmischungsvorgängen (Sedimentation) entgegenzuwirken, das Mischwasser auf 66 bis 79°C erhitzt und so der Ablöschvorgang des gebrannten Kalkes ($CaO + H_2O = Ca(OH)_2 + Q$ [exotherme Wärmeenergie]) angeregt und beschleunigt; dieser Vorgang führt zu einer Verdickung des Mörtelgemisches und damit zur Unterdrückung der Sedimentation. Unter diesen Bedingungen beträgt die zur Erzielung einer vollständigen Durchmischung erforderliche Zeit 3 bis 5 Minuten.

Ausserdem ist in der französischen Offenlegungsschrift 2 364 872 ein Verfahren zur Herstellung von Isoliermaterialien vom Tobermorittyp ohne Asbestfasern, bei welchem ein Schlamm beziehungsweise Brei aus einer Mischung aus Kalk und Siliciumdioxyd im Molverhältnis von 0,5:1 bis 1,1:1 sowie Wollastonit mit von Asbestfasern verschiedenen Fasern in Wasser bereitet wird, dieser zu einem formhaltenden Material mit einer Dichte von mindestens 0,32 g/cm³ geformt wird und der so erhaltene Körper in einer Wasserdampfatmosphäre während einer Zeit, die ausreicht, um den Kalk, das Siliciumdioxyd und das Wasser in einen mit dem Wollastonit verstärkten Calciumsilikathydratformkörper vom Tobermorittyp zu überführen, behandelt wird (Autoklavenhärten), beschrieben. Eine Vorreaktion ist nicht vorgesehen, sondern nur ein mehrere Minuten dauerndes Mischen zum Dispergieren der Feststoffe (Homogenisieren des Stoffgemisches), wobei auf Seite 7, Zeile 4 bis 10 der französischen Offenlegungsschrift 2 364 872 ausdrücklich angegeben ist, dass im wesentlichen die Gesamtheit des Kalkes und Siliciumdioxydes in Gegenwart von Wasser beim Autoklavenhärten reagieren. So kann jedoch ein langsamer Gelaufbau mit den daraus sich ergebenden vorteilhaften Produkteigenschaften nicht erfolgen.

Ferner ist aus der US-Patentschrift 3 501 324 (und der ihr entsprechenden deutschen Patentschrift 17 96 293) ein Verfahren zur Herstellung von ohne Dampfdruckanwendung zu Körpern formbaren wässrigen Aufschlämmungen von Calciumsilikatkristallen, bei welchem eine wässrige Aufschlämmung von Kalk und Siliciumdioxyd im Molverhältnis von CaO zu $SiO_2$ von 0,65 zu 1 bis 1,3:1 sowie gegebenenfalls Wollastonit unter einem Dampfdruck von mindestens 5 atü auf Temperaturen von 175 bis 225°C erhitzt wird, was nur in Rührautoklaven durchführbar ist, und aus dem so erhaltenen Calciumsilikathydratkristallbrei Formkörper, vorzugsweise unter Zusatz von Tonmineralen, hergestellt werden, die dann bei Temperaturen von 100 bis 500°C getrocknet werden, bekannt; es wird also keine Autoklavenhärtung, sondern nur eine Autoklavenvorreaktion durchgeführt. Bei Durchführung der Vorreaktion bei den hohen Temperaturen von 175 bis 225°C kann aber ein langsamer Gelaufbau mit den daraus sich ergebenden vorteilhaften Produkteigenschaften nicht stattfinden. Die Verwendung von Wollastonit als Zusatz könnte ohnehin nicht in diesem Sinne wirken. Hinzukommt noch, dass, da beim Verfahren der US-Patentschrift 3 501 324 die Hydrothermalerhärtung vor der Formgebung erfolgt, der üblicherweise aus der Hydrothermalerhärtung sich ergebende Effekt der Verkittung der Materialteilchen untereinander nicht mehr eintritt. Es handelt sich um ein kristallines Stoffgemisch, das keiner erneuten Reaktion in diesem Sinne unterworfen wird. Auch dies trägt dazu bei, dass schlechte Produkteigenschaften, insbesondere die Festigkeit betreffend, erhalten werden.

Weiterhin ist in der australischen Patentschrift 428 565 ein Verfahren zur Herstellung von Calciumsilikatmaterialien durch Umsetzen eines Alkalimetallsilikates und eines löslichen Calciumsalzes zu einem Calciumtrisilikat und Umsetzen des letzteren mit Kalk und gegebenenfalls Siliciumdioxyd zur Erzeugung eines Tobermorit enthaltenden Calciumsilikates, wobei die Molverhältnisse von Calciumoxyd zu Siliciumdioxyd vorzugsweise 0,75 bis 1,0 betragen, beschrieben. Die letzgenannte Umsetzung wird unter Vorerhitzen der Aufschlämmung auf Temperaturen von 60 bis 90°C oder Erhitzen zum Sieden durchgeführt, worauf ein Formen und Autoklavenhärten folgen. Von einem Zusatz von synthetisch hergestelltem Calciumsilikat ist keine Rede. Wegen der Verwendung von Calciumtrisilikat als Ausgangsmaterial ist aber die Reaktion anders, wobei aus den prozessrelevanten chemischen Abläufen bestenfalls C-S-H-Phasen, die Fehlordnungen im Kristallgitter aufweisen und einen schlecht kristallisierten Zustand besitzen (schlecht kristallisierter Tobermorit), also bestenfalls Produkte mit einer nur schlecht ausgebildeten Tobermoritphase erhalten werden können. Daher haben diese schlechte Eigenschaften, insbesondere was die Druckfestigkeit, Biegefestigkeit und Wärmebeständigkeit betrifft. Auch bleiben im Endprodukt trotz des Auswaschens des Tricalciumsilikates erhebliche Anteile von $Na_2O$ und Chlorid erhalten, wodurch sich zwangsläufig Produkteigenschaften, die hinsichtlich ihrer Wärmebeständigkeit deutlich unterhalb 900°C liegen, ergeben. Die lineare Schwindung solcher Produkte ist, wenn keine grossen Zusatzmengen von Asbestfasern verwendet werden, verhältnismässig gross. Die Produkteigenschaften werden auch noch durch das Vorerhitzen auf eine Temperatur von 60 bis 90°C oder zum Sieden, welches kurzzeitig (5 bis 30 Minuten) durchgeführt wird, verschlechtert.

Ferner ist aus der deutschen Offenlegungsschrift 27 51 660 ein Verfahren zur Herstellung von Calciumsilikatformerzeugnissen durch Umsetzen von Calciumoxyd und Siliciumdioxyd in wässriger Dispersion, Formen der wässrigen Aufschlämmung nach dem Pressfilterverfahren und Härten mit Dampf unter Druck bekannt. Es erfolgt jedoch kein Zusatz von Calciumsilikat. Die Vorreaktion wird bei einer Temperatur von mehr als 130°C, vorzugsweise 150 bis 230°C, speziell 160 bis 210°C, unter erhöhtem Druck durchgeführt, wie es aus Seite 8, Zeile 3 bis 5 und den Beispielen der genannten Druckschrift hervorgeht. Aus den Beispielen der genannten Druckschrift gehen Vorreaktionszeiten von 1 bis 4 Stunden hervor.

Ein ähnliches Verfahren ist aus der deutschen Offenlegungsschrift 26 27 823 bekannt, welches sich von dem der deutschen Offenlegungsschrift 27 51 660 hauptsächlich darin unterscheidet, dass das Gewichtsverhältnis von CaO zu $SiO_2$ auf etwa 0,70 bis 0,80 eingestellt wird, also das Molverhältnis von CaO zu $SiO_2$ erst recht unter 0,80 liegt, expandierter Perlit als wesentlicher Ausgangsstoff verwendet wird und die Vorreaktion bei einer Temperatur von etwa 80 bis 95°C während einer Zeitdauer bis zu etwa 1 Stunde durchgeführt wird.

Schliesslich ist aus der US-Patentschrift 3 352 699 ein Verfahren zur Herstellung von Sand/Kalk-Ziegeln, das heisst Kalksandsteinziegeln aus Calciumhydroxyd, Portlandzement, Siliciumdioxyd und synthetischem Tobermorit, welcher durch Vermischen von Kalk und Siliciumdioxyd im Molverhältnis von 1:1 mit Wasser, Formen, Härten in einem Autoklaven und Zerkleinern erhalten worden ist, sowie Wasser durch inniges Vermischen dieser Ausgangsstoffe, Formen der Mischung zu Ziegeln und Härten des so erhaltenen Produktes in einem Autoklaven bekannt. Der CaO-Anteil im Ausgangsgemisch ist dabei unter 6,5 Gew.-%. Mit dem Zusatz von hydraulischen Bindemitteln wird das Ziel verfolgt, bessere Qualitätseigenschaften für diese Produktart zu erreichen, und der Zusatz von synthetischem Tobermorit hatte die Funktion von Kristallisationskeimen in der damaligen Annahme, dadurch die Neubildung von Tobermorit zu beschleunigen. Dabei wird das Stoffgemisch aus Quarzsand, gebranntem Kalk, Portlandzement und synthetischem Tobermorit gemahlen und dann mit einer speziellen Presse für die Herstellung von Kalksandsteinen zu Steinformaten geformt. Das zu verpressende Rohstoffgemisch ist nur schwach angefeuchtet, und zwar nur soweit, wie es für die Hydratation der eingesetzten Bindemittel erforderlich ist. Auch die so erhaltenen Produkte lassen hinsichtlich ihrer Eigenschaften zu wünschen übrig.

Der Erfindung liegt die Aufgabe zugrunde, unter Behebung der Nachteile der bekannten Verfahren ein Verfahren zur Herstellung von überlegenen Eigenschaften, insbesondere Festigkeits- und Homogenitätseigenschaften, aufweisenden, keine gesundheitsschädlichen Stoffe, wie freien Quarz oder Asbestfasern, enthaltenden, stets die Qualitätsmerkmale der Feuerbeständigkeit erfüllenden überlegen wärmebeständigen und wärmedämmenden massgenauen Leichtbauplatten mit vorteilhafter Rohdichte, bei welchem das Formen durch Filterpressen stets glatt durchführbar ist, indem das durch die Vorreaktion erhaltene Gel unbegrenzt beständig bleibt, also eine unbegrenzte Zwischenlagerung desselben möglich ist, und sowohl die stofflichen als auch die technischen Voraussetzungen, welche eine wirtschaftliche Herstellung ermöglichen, erfüllt sind, zu schaffen.

Das Obige wurde erfindungsgemäss überraschenderweise erreicht.

Gegenstand der Erfindung ist ein Verfahren zur Herstellung von feuerbeständigen massgenauen Leichtbauplatten mit einer Rohdichte von etwa 160 kg/m³ bis 800 kg/m³ auf der Grundlage von faserverstärkten Calciumsilikatmassen durch Umsetzen von amorphem und kristallinem Siliciumdioxyd beziehungsweise diese enthaltenden Materialien mit Calciumoxyd beziehungsweise dieses enthaltenden Materialien in einem Molverhältnis von CaO zu $SiO_2$ von 0,8:1 bis 1,1:1 unter Zusatz von synthetischen Calciumsilikaten und Einarbeiten von toxikologisch unbedenklichen Faserstoffen in Gegenwart von Wasser und unter Entwässern erfolgendes Formen und Autoklavenhärten, welches dadurch gekennzeichnet ist, dass der CaO-$SiO_2$-Ausgangsmischung ein synthetisch hergestelltes Calciumsilikatgranulat beziehungsweise -pulver mit einem Molverhältnis von CaO zu $SiO_2$ von 0,8:1 bis 1,1:1 zugesetzt und die Umsetzung zur langsamen Ausbildung der Gelstruktur vor dem Formen (Vorreaktion) ohne äussere Wärmeanwendung in einer zur gewünschten Rohdichte der herzustellenden Leichtbauplatte in umgekehrter Funktion stehenden Mindestzeit von mindestens 5 Stunden im Falle der Herstellung einer eine Rohdichte von 800 kg/m³ aufweisenden Leichtbauplatte bis mindestens 12 Stunden im Falle der Herstellung einer eine Rohdichte von 160 kg/m³ aufweisenden Leichtbauplatte steigend durchgeführt wird.

Bei der Durchführung der Umsetzung vor dem Formen (Vorreaktion) ohne äussere Wärmeanwendung (Arbeiten ohne Erwärmen) handelt es sich anders ausgedrückt um die Durchführung dieser Umsetzung bei der Temperatur, welche sich bei der Reaktion (durch die Reaktionswärme) von selbst einstellt. Diese beträgt im Falle der Verwendung einer 8 bis 12% Feststoffe enthaltenden Dispersion als Rohstoffgemisch im allgemeinen 36 bis 40°C. So wird ein langsamer Aufbau der Gelstruktur mit den daraus sich ergebenden genannten vorteilhaften Materialeigenschaften erzielt.

Es wird also die optimale Gelstruktur erreicht. Sie bleibt dann unbegrenzt beständig, das heisst, dass die gut fliessfähige Materialkonsistenz für den Vorgang der Formgebung im Filterpressverfahren über einen unbegrenzten Verarbeitungszeitraum erhalten bleibt, wobei die Materialverteilung in der Filterpressform gewährleistet bleibt. Längere Zeiten der Umsetzung vor dem Formen (Vorreaktionszeiten) beeinträchtigen also die Materialeigenschaften überhaupt nicht. Ganz besonders bevorzugt ist es, bei der Umsetzung vor dem Formen (Vorreaktion) intermittierend zu rühren, beispielsweise jeweils nach 3 Stunden kurz zu rühren, weil dadurch ganz besonders gute Gelstrukturen sich ausbilden.

Es wurde nämlich überraschenderweise festgestellt, dass bei Zusatz eines synthetischen Calciumsilikatgranulates beziehungsweise -pulvers von auf das übrige Ausgangsgemisch abgestimmter Zusammensetzung und Durchführung der Umsetzung vor dem Formen (Vorreaktion) ohne äussere Wärmeanwendung während der festgelegten Zeitdauer im Gegensatz zu den bekannten Verfahren mit einem wesentlich geringeren Anteil an amorphem Siliciumdioxyd bei der Möglichkeit der unbegrenzten Zwischenlagerung des erhaltenen Geles und damit einer glatten Durchführbarkeit des Filterformpressens sowie bei verhältnismässig geringem Aufwand unter den Bedingungen der hydrothermalen Autoklavenhärtung homogene Produkte mit überlegenen Festigkeitseigenschaften, insbesondere hinsichtlich des Verhältnisses von Biegefestigkeit zu Druckfestigkeit (2:3 bis 2,6:3) noch dazu ohne Verwendung von Asbestfasern gegenüber nur 1:5 bis 1:3 ohne Verwendung des erfindungsgemäss verwendeten Zusatzes von synthetisch hergestelltem Calciumsilikatgranulat beziehungsweise -pulver oder ohne Durchführung der Vorreaktion nach den erfindungsgemässen Festlegungen), und für die Formgebung günstigen Materialeigenschaften erhalten werden. Auch im übrigen begünstigt dieser in seiner chemischen Zusammensetzung der zu Calciumsilikatmassen umzusetzenden Reaktionsmischung gleichwertige Zusatzstoff unter den festgelegten Bedingungen die Produkteigenschaften in vorteilhafter Weise, wobei eine monolithische Materialstruktur erreicht wird. Das im erfindungsgemässen Verfahren verwendete synthetisch hergestellte Calciumsilikatgranulat beziehungsweise -pulver ist also nicht lediglich ein Füllstoff, sondern ein die Verbesserung beziehungsweise Korrektur der Materialeigenschaften gegenüber denen der bekannten Produkte bewirkender und gleichzeitig chemisch gleichwertiger, also eine Materialhomogenität sicherstellender Zusatz.

Das erfindungsgemässe Verfahren ist auch gegenüber dem Verfahren der deutschen Patentschrift 1 012 857 sehr überraschend. Schon die Aufgabenstellungen der beiden sind verschieden. Im Gegensatz zum Verfahren der genannten Druckschrift richtet sich das erfindungsgemässe Verfahren auf die Herstellung von plattenförmigen Formkörpern mit niedriger Rohdichte (Leichtbauplatten), wobei solche mit einer Dicke ab 10 mm hergestellt werden können, was mit dem Verfahren der deutschen Patentschrift 1 012 857 nicht möglich ist. So unterscheidet sich das erfindungsgemässe Verfahren von dem der genannten Druckschrift grundlegend darin, dass nach dem ersteren im Gegensatz zum letzteren eine Vorreaktion von mindestens 5 Stunden ohne äussere Wärmeanwendung durchgeführt wird. Hierzu ist zu bemerken, dass das Durchmischen in der genannten Druckschrift nichts mit der Vorreaktion des erfindungsgemässen Verfahrens zu tun hat. Das Durchmischen, welches auch beim erfindungsgemässen Verfahren durchgeführt werden kann, erfolgt während einer Mischzeit von 3 bis 5 Minuten ausserhalb des Reaktionsbehälters, zweckmässig in einem Intensivmischer. Diese Zeit ist zu kurz für eine Reaktion oder gar eine zur Ausbildung der optimalen Gelstruktur. Demgegenüber ist es überraschend, dass nur durch die erfindungsgemäss durchgeführte Vorreaktion von mindestens 5 Stunden ohne äussere Wärmeanwendung in Gegenwart eines synthetisch hergestellten Calciumsilikatgranulates beziehungsweise -pulvers ein langsamer Aufbau der Gelstruktur bei unbegrenzter Beständigkeit und damit Zwischenlagerungsmöglichkeit mit den daraus sich ergebenden vorteilhaften Materialeigenschaften der erhaltenen Produkte erzielt werden kann, und zwar um so mehr, als in der deutschen Patentschrift 1 012 857 erstens die Eigenschaft der synthetisch hergestellten Calciumsilikatgranulate beziehungsweise -pulver, eine optimale Gelstruktur herbeizuführen, unausgenutzt gelassen wurde und zweitens durch die äussere Wärmeanwendung selbst die Durchführung einer Vorreaktion, die wie bereits erwähnt nicht vorgesehen war, nicht den gewünschten Erfolg herbeigeführt hätte, indem die Materialkonsistenz zu stark angestiegen wäre, um einen brauchbaren Gelaufbau und vorteilhafte Produkteigenschaften zu erhalten. In diesem Zusammenhang ist zu bemerken, dass die Vorreaktion von mindestens 5 Stunden ohne äussere Wärmeanwendung zwingend ist, um die erfindungsgemäss erhaltene Formgebungscharakteristik der Rohmischung überhaupt zu erzielen und um plattenförmige Formkörper mit niedriger Rohdichte in Dicken ab 10 mm herzustellen.

Dazu, dass erfindungsgemäss plattenförmige Formkörper mit Dicken ab 10 mm erhalten werden können, ist die Gegenwart von Faserstoffen erforderlich, während beim Verfahren der deutschen Patentschrift 1 012 857 solche nicht verwendet werden, so dass durch es nur einfache, durch Giessen der Mischung in Formen zu erzeu-

0 007 585

gende Körper, nicht jedoch plattenförmige Formkörper erhalten werden können. Auch spielt beim erfindungsgemässen Verfahren der Gesichtspunkt einer optimalen Lösung des Problems des Ersatzes der toxikologisch ungünstigen Faserstoffe, wie Asbestfasern, durch toxikologisch unbedenkliche Faserstoffe mit, welcher dem Verfahren der genannten Druckschrift fremd ist.

Wie bereits erwähnt bringt das erfindungsgemässe Verfahren gegenüber dem Verfahren der deutschen Patentschrift 1 012 857 insbesondere auch hinsichtlich der Produkteigenschaften einen grossen technischen Fortschritt mit sich. So können erfindungsgemäss schon bei einer Rohdichte von nur 500 kg/m³ aufweisenden Produkten eine Druckfestigkeit von 7,5 N/mm², eine Biegefestigkeit von 6,5 N/mm², ein Verhältnis der Biegefestigkeit zur Druckfestigkeit von 2,6:3, eine Schwindung bei 750°C von nur 1,2% und eine Wärmeleitzahl von 0,105 W/mK im Gegensatz zu den Produkten des Verfahrens der genannten Druckschrift bei der in ihr erwähnten höheren Rohdichte von 0,641 g/cm³ = 641 kg/m³ mit einer Druckfestigkeit von nur etwa 5 N/mm², einer Biegefestigkeit von nur etwa 1,4 bis 1,7 N/mm², einem Verhältnis der Biegefestigkeit zur Druckfestigkeit von nur 1:3 bis 1:3,5, einer Schwindung bei 750°C von etwa 4,5 bis 5%, sofern der Prüfkörper überhaupt eine derartige Thermostabilität aufweist, und einer Wärmeleitzahl von etwa 0,10 W/mK erhalten werden. Durch das erfindungsgemässe Verfahren können also bei gleich guter Wärmeleitzahl Produkte mit wesentlich höherer Festigkeit und wesentlich geringerer Schwindung als die bei den Produkten des Verfahrens der genannten Druckschrift erzielt werden.

Auch gegenüber dem Verfahren der französischen Offenlegungsschrift 2 364 872 ist das erfindungsgemässe Verfahren überraschend. Auch in diesem Zusammenhang gelten die in bezug auf die deutsche Patentschrift 1 012 857 gemachten Ausführungen, da zwischen dem erfindungsgemässen Verfahren und auch dem Verfahren der französischen Offenlegungsschrift 2 364 872 der grundlegende Unterschied besteht, dass im ersteren im Gegensatz zum letzteren eine Vorreaktion durchgeführt wird und nur dadurch ein optimaler Gelaufbau mit den daraus folgenden vorteilhaften Produkteigenschaften erfolgen kann, während eine solche Gelbildung beim Verfahren der genannten Druckschrift nicht möglich ist, wobei die ausdrückliche Angabe in der letzteren, dass die Reaktion erst beim Autoklavenhärten erfolgt, die in bezug auf die deutsche Patentschrift 1 012 857 gemachten Ausführungen auch noch untermauert. Gegenüber der französischen Offenlegungsschrift 2 364 872 besteht auch der gravierende Unterschied im verwendeten Zusatz, indem im erfindungsgemässen Verfahren als Zusatz ein synthetisch hergestelltes Calciumsilikatgranulat beziehungsweise -pulver, im Verfahren der französischen Offenlegungsschrift 2 364 872 dagegen das Naturprodukt Wollastonit verwendet wird, wobei diese beiden Materialien mineralogisch sehr verschieden sind. Unter natürlichem Wollastonit ist die kristallwasserfreie C-S-H-Form zu verstehen, während unter synthetischem Calciumsilikat die C-S-H-Formen für Tobermorit beziehungsweise Xonotlit, die entweder 5 oder 1 Mol $H_2O$ als Kristallwasser im Kristallgitter enthalten, zu verstehen sind. Des weiteren sind auch die Kristallformen gleichermassen verschieden. Dies hat im Endprodukt einen gravierenden Unterschied hinsichtlich der Kristallisationsformen im Endzustand zur Folge. Dieser wiederum ist von grosser Bedeutung für die erzielbaren Produkteigenschaften. Im Gegensatz zum nach der französischen Offenlegungsschrift 2 364 872 verwendeten Wollastonit, welcher kein zur Gelbildung geeigneter Zusatz ist und auch keine Neigung zur Reaktivierung unter den Hydrothermalbedingungen hat, also bestenfalls eine Füllstoffunktion erfüllt, wobei beim Verfahren der genannten Druckschrift bestenfalls ein schlecht tobermoritisches Endprodukt entsteht, wird im erfindungsgemässen Verfahren durch den Zusatz des synthetisch hergestellten Calciumsilikatgranulates beziehungsweise -pulvers in Verbindung mit der Durchführung der Vorreaktion ohne äussere Wärmeanwendung der langsame optimale Gelaufbau und damit eine optimale Reaktionsführung unter Erzielung der vorteilhaften Produkteigenschaften erreicht. Ferner ist das erfindungsgemässe Verfahren von dem der französichen Offenlegungsschrift 2 364 872 auch deswegen grundlegend verschieden, weil beim ersteren ein unter Entwässern erfolgendes Formen durchgeführt wird, während beim letzteren die hergestellte Mischung nur in Formen eingefüllt wird.

So bringt das erfindungsgemässe Verfahren auch gegenüber dem der französischen Offengungsschrift 2 364 872 einen grossen technischen Fortschritt insbesondere hinsichtlich der Produkteigenschaften mit sich, wie es sich aus einem Vergleich vor allem der betreffenden Zahlenwerte ergibt. Insbesondere hinsichtlich der Festigkeit sind die erfindungsgemäss hergestellten Produkte den nach dem Verfahren der genannten Druckschrift erhaltenen stark überlegen. Aber auch hinsichtlich der Schwindung sind die ersteren den letzteren überlegen. Schliesslich sind die erfindungsgemäss hergestellten Produkte auch hinsichtlich der Wärmeleitzahl denen des Verfahrens der genannten Druckschrift überlegen.

Das erfindungsgemässe Verfahren ist auch gegenüber dem Verfahren der US-Patentschrift 3 501 324 (und der ihr entsprechenden deutschen Patentschrift 17 96 293) überraschend. Wie es aus der oben erfolgten Würdigung anderer Druckschriften eindeutig hervorgeht, wird nämlich auf Grund der Verwendung eines synthetisch hergestellten Calciumsilikatgranulates beziehungsweise -pulvers als Zusatz beim erfindungsgemässen Verfahren an Stelle des Wollastonites beim Verfahren der US-Patentschrift 3 501 324 in Verbindung mit der Vorreaktion ohne äussere Wärmeanwendung beim erfindungsgemässen Verfahren im Gegensatz zur Durchführung der Vorreaktion bei den hohen Temperaturen von 175 bis 225°C beim Verfahren der US-Patentschrift 3 501 324 beim erfindungsgemässen Verfahren im Gegensatz zum Verfahren der genannten Druckschrift überraschenderweise ein langsamer Gelaufbau mit den daraus sich ergebenden überlegenen Produkteigenschaften erzielt, wobei es klar ist, dass der Fachmann durch die Anwendung von hohen Temperaturen noch dazu in verhältnismässig komplizierten Vorrichtungen mit hohem Aufwand nach der US-Patentschrift 3 501 324 geradezu von der Erfindung abgelenkt wurde, da er nicht annehmen konnte, dass so kompliziert gearbeitet worden wäre, wenn es auch einfacher ginge, zumal mit der Durchführung der Vorreaktion bei hohen Temperaturen unter Fortfall der Hydrothermalhärtung (Autoklavenhärtung) der Formkörper auch noch das Fehlen des Effektes der Verkittung der Materialteilchen untereinander in Kauf genommen werden müsste.

Insbesondere durch das Zustandbringen von Produkten mit überlegenen Eigenschaften, vor allem überlegenen Festigkeitseigenschaften und überlegen geringer Schwindung, bringt das erfindungsgemässe Verfahren auch gegenüber dem Verfahren der US-Patentschrift 3 501 324 einen sehr grossen technischen Fortschritt mit sich, wie es sich aus einem Vergleich besonders der betreffenden Zahlenwerte ergibt, wozu noch die grosse Verfahrensvereinfachung infolge des Fortfalles der Wärmeanwendung in Rührautoklaven hinzukommt. Im Falle der Verwendung von Tonmineralen als amorphem Siliciumdioxyd im erfindungsgemässen Verfahren besteht gegenüber dem Verfahren der US-Patentschrift 3 501 324 bei der bevorzugten Verwendung von Tonmineralen in diesem der weitere Vorteil, dass bei den Produkten des ersteren im Gegensatz zu denen des letzteren bei einem Befeuchten sich kein Quelleffekt zeigt. Bei einem Befeuchten der Produkte der genannten Druckschrift zeigt sich nämlich der von den Tonmineralen ausgehende Quelleffekt mit den daraus zwangsläufig für die Anwendung sich ergebenden Nachteilen deswegen, weil die Tonminerale erst zum Formen beziehungsweise vor dem Trocknen, also nach dem Erhitzen im Rührautoklaven zugegeben werden. Im Gegensatz dazu erfolgt die Zugabe der beim erfindungsgemässen Verfahren gegebenenfalls verwendeten Tonminerale gleich zur Ausgangsmischung, also vor dem Autoklavenhärten. So geht unter den Bedingungen der Hydrothermalhärtung (Autoklavenhärtung) die Quellfähigkeit der Tonminerale verloren, da Calciumaluminiumsilikate entstehen, das heisst der Charakter der Tonminerale durch den Einbau von CaO in das Kristallgitter aufgehoben wird.

Auch gegenüber dem Verfahren der australischen Patentschrift 428 565 ist das erfindungsgemässe Verfahren überraschend. Wie es aus der oben erfolgten Würdigung anderer Druckschriften eindeutig hervorgeht, wird nämlich auf Grund der Verwendung eines synthetisch hergestellten Calciumsilikatgranulates beziehungsweise -pulvers als Zusatz beim erfindungsgemässen Verfahren statt des Arbeitens ohne einen solchen Zusatz beim Verfahren der australischen Patentschrift 428 565 in Verbindung mit der Vorreaktion ohne äussere Wärmeanwendung beim erfindungsgemässen Verfahren statt der Durchführung des Verfahrens nach der australischen Patentschrift 428 565 ohne Vorreaktion, noch dazu in Anbetracht des kurzdauernden Vorerhitzens auf 60 bis 90°C oder zum Sieden, welches von der mindestens 5 Stunden dauernden Vorreaktion ohne äussere Wärmeanwendung beim erfindungsgemässen Verfahren geradezu ablenkt beim erfindungsgemässen Verfahren im Gegensatz zum Verfahren der genannten Druckschrift, bei welchem wegen der erhöhten Temperatur der Aufbau der Gelstruktur nicht langsam genug und wegen der kurzen Zeitdauer nicht vollständig erfolgt und so ungünstige Produkteigenschaften erhalten werden, überraschenderweise ein langsamer Gelaufbau mit den daraus sich ergebenden überlegenen Produkteigenschaften erzielt. Noch dazu konnte dies überraschenderweise unter Fortfall der Verwendung von Asbestfasern, die beim Verfahren der genannten Druckschrift in hoher Menge zu verwenden sind, um überhaupt noch diskutable Produkte zu erzielen, erreicht werden. Schliesslich lenkten auch die Verwendung von Calciumtrisilikat und der Umweg der 2 verschiedenen Umsetzungen über dieses nach der genannten Druckschrift vom einfacheren erfindungsgemässen Verfahren mit seiner nur 1 Umsetzung des Siliciumdioxydes beziehungsweise dieses enthaltenden Materiales mit dem Calciumoxyd beziehungsweise dieses enthaltenden Material in einem Molverhältnis von CaO zu $SiO_2$ von 0,8:1 bis 1,1:1 in Gegenwart eines Zusatzes eines synthetisch hergestellten Calciumsilikatgranulates beziehungsweise -pulvers ab.

Insbesondere durch das Liefern von Produkten mit überlegenen Eigenschaften, vor allem überlegenen Festigkeitseigenschaften, bei Wegfall der Verwendung von Asbestfasern bringt das erfindungsgemässe Verfahren auch gegenüber dem Verfahren der australischen Patentschrift 428 565 einen sehr grossen technischen Fortschritt mit sich, wie es sich aus einem Vergleich besonders der betreffenden Zahlenwerte ergibt, wozu noch die grosse Verfahresvereinfachung, vor allem wegen des Fortfalles des Umweges über das Calciumtrisilikat hinzukommt.

Auch gegenüber dem Verfahren der deutschen Offenlegungsschrift 27 51 660 ist das erfindungsgemässe Verfahren überraschend, und zwar aus analogen Gründen wie gegenüber dem Verfahren der US-Patentschrift 3 501 324, da das erfindungsgemässe Verfahren sich auch von der ersteren sowie von der letzteren grundsätzlich in der Verwendung eines synthetisch hergestellten Calciumsilikatgranulates beziehungsweise -pulvers als Zusatz in Verbindung mit der Durchführung der Vorreaktion ohne äussere Wärmeanwendung während mindestens 5 Stunden unterscheidet.

Das erfindungsgemässe Verfahren bringt gegenüber dem Verfahren der deutschen Offenlegungsschrift 27 51 660 insbesondere durch das Zustandebringen von Produkten mit überlegenen Eigenschaften, vor allem überlegenen Festigkeitseigenschaften, wie sie sich aus einem Vergleich besonders der betreffenden Zahlenwerte ergeben, und darüberhinaus durch die grosse Verfahrensvereinfachung infolge des Fortfalles der Wärmeanwendung in Rührautoklaven einen grossen technischen Fortschritt mit sich.

Das erfindungsgemässe Verfahren ist auch gegenüber dem Verfahren der deutschen Offenlegungsschrift 26 27 823 überraschend, und zwar aus analogen Gründen wie gegenüber dem Verfahren der US-Patentschrift 3 501 324, da das erfindungsgemässe Verfahren sich auch von der ersteren so wie von der letzteren grundsätzlich in der Verwendung eines synthetisch hergestellten Calciumsilikatgranulates beziehungsweise -pulvers als Zusatz in Verbindung mit der Durchführung der Vorreaktion ohne äussere Wärmeanwendung während mindestens 5 Stunden unterscheidet.

Insbesondere durch das Zustandebringen von Produkten mit überlegenen Eigenschaften bringt das erfindungsgemässe Verfahren auch gegenüber dem Verfahren der deutschen Offenlegungsschrift 26 27 823 einen sehr grossen technischen Fortschritt mit sich, wie es sich aus einem Vergleich besonders der betreffenden Zahlenwerte ergibt. Besonders die überlegenen Festigkeitseigenschaften sind hervorzuheben. Hinzu kommt noch, dass erfindungsgemäss im Gegensatz zum Verfahren der deutschen Offenlegungsschrift 26 27 823, dessen Produkte wegen der Verwendung eines Molverhältnisses von CaO zu $SiO_2$ unter 0,80 und damit einer weit geringer als 100%-igen Umwandlung mit einem wesentlichen Anteil von nicht umgesetztem $SiO_2$ und folglich schlecht ausgebildeten C-S-H-Phasen eine nicht besonders gegenüber hohen Temperaturen entwickelte Wärmebeständigkeit haben, infolge der Verwendung von Molverhältnissen von CaO zu $SiO_2$ von 0,8:1 bis 1,1:1 Produkte, die kein freies $SiO_2$, sondern nur Tobermorit enthalten und damit eine überlegene Wärmebeständigkeit aufweisen, erhalten werden. Auch der Fortfall der Verwendung des Perlites beim erfindungsgemässen Verfahren gegenüber dem der deutschen Offenlegungsschrift 26 27 823 wirkt im Sinne von besseren Produkteigenschaften beim ersteren gegenüber denen beim letzteren. Insbesondere ist deswegen die lineare Schwindung bei den erfindungsgemäss hergestellten Produkten geringer als bei den Produkten des Verfahrens der genannten Druckschrift.

Das erfindungsgemässe Verfahren ist von dem der US-Patentschrift 3 352 699 schon deswegen grundlegend verschieden, weil das erstere die Herstellung von feuerbeständigen massgenauen Leichtbauplatten auf der Grundlage von faserverstärkten Calciumsilikatmassen, das letztere dagegen die Herstellung von Kalksandsteinziegeln betrifft. Auch wegen der Verwendung des Kalkes in einer dem Molverhältnis von CaO zu $SiO_2$ von

0,8:1 bis 1,1:1 entsprechenden Menge beim erfindungsgemässen Verfahren gegenüber der Verwendung des Kalkes in nur geringer Menge von bis zu 6,5 Gew.-% bei einer Menge von mindestens 65 Gew.-% Siliciumdioxyd, das heisst sehr im Unterschuss beim Verfahren der US-Patentschrift 3 352 699 haben die beiden miteinander nichts zu tun.

Ferner besteht eine grundlegende Verschiedenheit zwischen dem erfindungsgemässen Verfahren und dem Verfahren der US-Patentschrift 3 352 699 im Formen, indem beim ersteren das Formen unter Entwässern, wie durch Filterpressen, durchgeführt wird, während beim letzteren kein Entwässern zu erfolgen hat. Auch die zwingende Verwendung von Portland-Zement beim Verfahren der US-Patentschrift 3 352 699 hat vom erfindungsgemässen Verfahren weggeführt, da dieser im erfindungsgemässen Verfahren sogar nachteilig wäre, indem die Existenz von Calciumaluminiumsilikaten die Ausbildung von C-S-H-Phasen stören und sich auf die Wärmebeständigkeit nachteilig auswirken würde.

Das erfindungsgemässe Verfahren bringt auch gegenüber dem Verfahren der US-Patentschrift 3 352 699, mit dem es wie bereits erwähnt ohnehin nicht vergleichbar ist, einen sehr grossen technischen Fortschritt, insbesondere hinsichtlich der erzielbaren Rohdichten und der Wärmeleitzahlen, mit sich, wie es sich aus einem Vergleich besonders der betreffenden Zahlenwerte ergibt.

Nach einer bevorzugten Ausführungsform der Erfindung wird als synthetisches Calciumsilikatgranulat beziehungsweise -pulver ein solches, welches aus amorphem und/oder kristallinem Siliciumdioxyd und Kalk, insbesondere Quarzmehl und Weisskalk, zweckmässig unter Zusatz von Mikroporenbildnern, durch Autoklavenhärtung hergestellt worden ist, verwendet.

So kann im erfindungsgemässen Verfahren vorteilhaft ein nach dem in der deutschen Offenlegungsschrift 28 32 194 gleicher Priorität der Anmelderin mit dem Titel «Verfahren zur Herstellung von Calciumsilikatgranulaten beziehungsweise -pulvern mit Mikroporenstruktur» beschriebenen Verfahren hergestelltes synthetisches Calciumsilikatgranulat beziehungsweise -pulver als Zusatz verwendet werden.

Zweckmässig wird das synthetische Calciumsilikat in einer Menge von 6 bis 20 Gew.-%, insbesondere 6 bis 15 Gew.-%, bezogen auf das Ausgangsgemisch, zugesetzt. Die Wahl der Menge dieses Zusatzes von synthetischem Calciumsilikat richtet sich nach der gewünschten Produktbeschaffenheit. Durch sie kann das Verhältnis der Druckfestigkeit zur Biegefestigkeit gesteuert werden. Es handelt sich also um ein fertigreagiertes autoklavengehärtetes Calciumsilikatprodukt. Seine Härtung kann zweckmässig bei 10 bis 15 atü erfolgt sein.

So kann durch Vermischen insbesondere von Quarzmehl und Weisskalk, beispielsweise in einem Molverhältnis von CaO zu $SiO_2$ von 1:1, unter Zugabe von Wasser und Einarbeiten von Mikroporenbildnern bei den Bedingungen der hydrothermalen Autoklavenhärtung ein Granulat, das bei einem Schüttgewicht von etwa 0,3 kg/l eine Druckfestigkeit von etwa 50 bis 60 kg/cm² aufweist, erhalten worden sein. Durch Einarbeiten dieses feinkörnigen Granulates auf der Grundlage von mikroporös gemachtem Calciumsilikat kann ein sehr günstiges Verhältnis der Biegefestigkeit zur Druckfestigkeit von 2:3 bis 2,5:3 erreicht werden.

Ein wesentlicher Vorteil des erfindungsgemässen Verfahrens ist wie bereits erwähnt auch die Möglichkeit der Verwendung des amorphen Siliciumdioxydes in gegenüber dem Stand der Technik wesentlich verminderter Menge mit dem damit verbundenen geringeren Aufwand ohne Verschlechterung der Umsetzung des Siliciumdioxydes mit dem Calciumoxyd, sondern sogar bei Verbesserung derselben, und ohne Verminderung des Wasserrückhaltevermögens (der Absorption). So kann im erfindungsgemässen Verfahren das amorphe Siliciumdioxyd schon in einem Anteil von mindestens 4 Gew.-%, bezogen auf das gesamte eingesetzte Siliciumdioxyd, verwendet werden, also umgekehrt sogar mit einem Anteil des kristallinen Siliciumdioxydes von 96 Gew.-%, bezogen auf das gesamte eingesetzte Siliciumdioxyd, gearbeitet werden.

Als amorphes Siliciumdioxyd können vorteilhaft hochquellfähige Tonmineralien und/oder Natrium- und/oder Kaliumsilikatlösungen und/oder Kieselgur und/oder Reisschalenasche und/oder pyrogene und/oder gefällte Kieselsäure und/oder amorphes Siliciumdioxyd enthaltende industrielle Nebenprodukte, insbesondere hochprozentiger Kieselsäurestaub der Ferrosiliciumerzeugung, in zur Erzielung der gewünschten Rohdichte bei Entfernung des Überschusswassers erforderlichen Menge oder anders ausgedrückt in zur Erzielung des zur jeweiligen Rohdichte notwendigen Wasserrückhaltevermögens erforderlicher Menge verwendet werden.

Für Leichtbauplatten, die nur normalen Anwendungstemperaturen auszusetzen sind, sind als amorphes Siliciumdioxyd hochquellfähige Tonmineralien wegen ihres besonders guten Wasserrückhaltevermögens und der daraus sich ergebenden niedrigen Rohdichte des Produktes bevorzugt. Als hochquellfähige Tonmineralien werden besonders bevorzugt dreischichtige Tonmineralien verwendet. Beispiele für solche sind Bentonite und Montmorillonite. Vorzugsweise werden die hochquellfähigen Tonmineralien in einer Menge von 0,5 bis 7 Gew.-%, insbesondere 1 bis 5 Gew.-%, bezogen auf das Ausgangsgemisch, zugesetzt.

Für spezielle hohen Temperaturen auszusetzende Leichtbauplatten werden vorteilhaft Natrium- und/oder Kaliumsilikatlösungen verwendet. Ein Beispiel für Natriumsilikatlösungen sind Wasserglaslösungen.

Beispiele für erfindungsgemäss verwendbare Faserstoffe sind Cellulosefasern, Steinwolle, alkalibeständige Glasfasern und Calciumsilikatfasern.

Vorzugsweise wird die Aufbereitung des Rohstoffgemisches mit einem zur Erzielung einer 8 bis 12% Feststoffe enthaltenden Dispersion erforderlichen Wasserüberschuss durchgeführt. Dadurch werden besonders günstige Gelstrukturen mit einer solchen Schlammkonsistenz, welche eine problemlose Zuführung mittels Pumpen ermöglicht, erhalten.

Zweckmässig werden das Entwässern zum Entfernen des überschüssigen Wassers in einer Filterpresse durchgeführt und die erhaltenen stabilen plattenförmigen Formkörper mit extrem niedriger Rohdichte im plastischen Zustand mittels Trennscheiben in kleinere Formate unterteilt.

Vorteilhaft wird mit einer Filterpressform mit beidseitiger und entsprechend den Filterpressformmassen ganzflächiger Entwässerung gearbeitet, wobei das auf der Oberseite austretende Filtratwasser mittels Vakuum abgesaugt wird.

Vorzugsweise wird ein stufenlos regelbarer Pressdruck von 0,15 MPa bis 0,75 MPa angewandt und die geformte Platte aus der Filterpresse heraus mit Vakuum bei vollflächiger Vakuumbeanspruchung umgesetzt.

Erfindungsgemäss können homogene Platten, die keine Schichtenbildung aufweisen, mit präzisen Massen, beispielsweise mit Abmessungen von 3,0 m x 1,25 m mit variabler Plattendicke von 10 bis 100 mm, geformt werden.

Nach einer zweckmässigen Ausführungsform der Erfindung werden materialgleiche Verbundelemente mit einer dünnwandigen äusseren Deckschicht mit einer Rohdichte von 300 bis 800 kg/m³ und einer darauf geschichteten Wärmedämmzone mit einer Rohdichte von 160 bis 300 kg/m³ geformt, wobei der Haftverbund durch chemische Reaktion unter den Bedingungen der hydrothermalen Autoklavenbehandlung durch materialgleiche C-S-H-Phasen gebildet wird.

Die nach dem erfindungsgemässen Verfahren hergestellten Leichtbauplatten haben wie bereits erwähnt eine trockene Rohdichte von etwa 160 kg/m³ bis 800 kg/m³ und erfüllen die Voraussetzung für eine hohe Wärmedämmung, wobei das Produkt unter den Bedingungen der Brandeinwirkung mit Temperaturen von zum Beispiel 950 bis 1 100°C seine Formbeständigkeit beibehält, selbst wenn derartige Einwirkungen über längere Zeit bestehen bleiben.

Unter Aufrechterhaltung dieser spezifischen Qualitätsmerkmale können nach dem erfindungsgemässen Verfahren entweder Bauplatten mit niedriger Rohdichte, die vorzugsweise auf die Erfüllung einer wärmebeständigen Wärmedämmfunktion ausgerichtet sind, oder bei entsprechend höherer Rohdichte und analog zur Rohdichte verminderter Wärmedämmung vordergründ'~ auf die Übernahme von baustatischen Beanspruchungen ausgerichtet sind, hergestellt werden, wobei die Qualitätsmerkmale der Feuerbeständigkeit stets erfüllt sind.

Durch das erfindungsgemässe Verfahren können also feuerbeständige Wärmedämmplatten beziehungsweise Konstruktionsbauplatten technisch fortschrittlich und wirtschaftlich hergestellt werden.

Die Herstellung dieser plattenförmigen Baukörper beruht auf der Anwendung von überlegenen Materialeigenschaften in technisch fortschrittlicher Weise ergebenden faserverstärkten Calciumsilikatmassen, deren thermostabilen C-S-H-Phasen, wie Tobermorit- oder Xonotlitkristallstrukturen, unter den bekannten Bedingungen der für derartige Stoffsysteme zur hydrothermalen Erhärtung anzuwendenden Autoklavenbehandlung entstehen, in der erfindungsgemäss festgelegten Weise, wobei der für die Hydrothermalreaktion anzuwendende Härtedruck in Abhängigkeit von den jeweils anzustrebenden Kristallstrukturen steht und von 10 bar bis 25 bar variieren kann.

Durch das erfindungsgemässe Verfahren können Bauplatten mit einer Temperaturbeständigkeit bis 1 000°C oder darüber, die keine gesundheitsschädlichen Stoffe enthalten und toxikologisch unbedenklich sind, hergestellt werden.

Das erfindungsgemässe Verfahren kann zweckmässig wie folgt durchgeführt werden.

Zunächst wird das Rohstoffgemisch mit dem Zusatz des synthetisch hergestellten Calciumsilikatgranulates beziehungsweise -pulvers unter normalen Temperaturbedingungen mit hierfür geeigneten Intensivmischern aufbereitet, wobei ein Dispersionszustand, der als leicht pumpfähig bezeichnet werden kann, erhalten wird.

Die so aufbereitete dünnbreiige Masse wird dann in Reaktionsbehältern bei normaler Temperatur zwischengelagert, in welchen sich dann in einem Zeitraum von 5 bis 12 Stunden (Vorreaktionszeit) je nach der gewünschten Rohdichte des Produktes die zum Zwecke der optimalen Wasserbindung angestrebten Gelstrukturen entwickeln. Obwohl dann diese Gelstrukturen optimal ausgebildet vorliegen, behält diese 8 bis 12% Feststoffe enthaltende Dispersion ihre leicht bewegliche und gut pumpfähige Konsistenz bei. Dieser Massenzustand ändert sich nach der Vorreaktionszeit nicht mehr, wodurch der Verarbeitungszeitraum praktisch unbegrenzt erhalten bleibt. Da bei einer längerdauernden Zwischenlagerung der Masse in den Reaktionsbehältern eine Sedimentation nicht ausgeschlossen werden kann, sind diese Reaktionsbehälter vorteilhaft mit solchen Rührwerkzeugen, welche bei ihrem Arbeiten die Gelstruktur nicht zerstören, ausgestattet. Auf diese Weise bleibt ein völlig homogenes Materialgemisch erhalten.

Die Formgebung zu Leichtbauplatten mit Rohdichten von etwa 160 bis 800 kg/m³ erfolgt nun in der Weise, dass das zur Erzielung eines bestimmten Plattenvolumens mit der jeweils zugeordneten Rohdichte erforderliche Schlämmevolumen mittels einer Membranpumpe aus dem Reaktionsbehälter in den über der Filterpresse angeordneten Dosierbehälter gepumpt wird. Dieses Füllvolumen gelangt nun mittels einer den Dosierbehälter nach unten abdichtenden Zellenradschleuse in die Filterpressform, wobei eine absolut gleichmässige Materialverteilung innerhalb der Filterpressform gewährleistet wird.

Es wird eine mit einer Filtergewebebespannung belegte und somit eine ganzflächige Entwässerung zulassende Bodenplatte aufweisende Filterpressform verwendet. Der die eigentliche Pressfunktion ausübende obere Pressstempel ist ebenfalls als ganzflächige Filterfläche ausgebildet und bildet in Verbindung mit den hydraulisch arbeitenden Presszylindern das Pressenoberteil. Die Umrandung dieser Filterpressform bildet gleichzeitig die Plattenaussenmasse, die beispielsweise so bemessen sind, dass eine Plattenlänge von 3,0 m und eine Plattenbreite von 1,25 m geformt werden kann. Die mit der Reaktionsschlämme gefüllte Filterpressform wird in die Presstation eingefahren. Dort wird der obere Pressstempel in die Form eingefahren und soweit abgesenkt, bis die vorgesehene Plattendicke erreicht ist. Das hierbei durch den Pressdruck entfernte überschüssige Wasser wird, soweit es auf der Unterseite austritt, in einer Auffangwanne gesammelt und, soweit es auf der Oberseite austritt, mittels Vakuum abgesaugt. Das gesamte Filtratwasser wird in einen zentralen Sammelbehälter gepumpt und der neu aufzubereitenden Mischung zugesetzt. Insoweit bestehen in bezug auf die Abwasserbeseitigung keine Probleme.

Nach der Durchführung dieses Pressarbeitsganges wird der obere Pressstempel ausgefahren und gleichzeitig die Formumrandung entfernt. Die auf der unteren Filterfläche liegende Platte kann nun gegebenenfalls mittels einfacher Trennscheiben, die in variablen Abständen angeordnet werden können, in bestimmte Masse geschnitten werden. Zu diesem Zeitpunkt enthält der geformte Rohling etwa 70 bis 85% Wasser, so dass keinerlei Staubentwicklung entstehen kann.

Daraufhin werden nun die Platten gemeinsam mit einer vollflächig aufliegenden Vakuumhaube von der den Formboden bildenden Filterfläche abgehoben und auf eine bereitstehende Horde umgesetzt.

Danach kann der nächste Pressarbeitsgang beginnen.

Diese Verfahrensweise kann so ausgelegt werden, dass die einzelnen Presstakte verschiedene und hintereinander angeordnete Stationen durchwandern und so einen Kreislauf bilden.

Die einzelnen Horden, die aus einem verwindungssteifen Rahmen, der mit einer dünnwandigen Lochplatte belegt ist, bestehen, werden übereinander gestapelt, wobei jeweils 4 Stützen den Abstand zwischen den einzelnen Horden bilden. Die auf einen Hordenwagen aufgesetzten Horden werden nun in einen Autoklaven eingefahren und für die Dauer der Autoklavenhärtung den zur Ausbildung der Hydrothermalsynthese bewirkenden Dampfdrücken von 10 bis 25 bar ausgesetzt.

Nach abgeschlossener Autoklavenhärtung wird der Hordenwagen nunmehr in einen Trockner eingefahren, in welchem der restliche Wassergehalt bei einer Temperatur von 140 bis 180°C unter entsprechender Luftumwälzung verdampft wird.

Danach haben die Leichtbauplatten ihren endgültigen Zustand erreicht und entsprechen in ihren Abmessungen den gewünschten Massen, das heisst, dass die sonst erforderliche Sägearbeit entfällt.

Die Erfindung wird anhand der folgenden Beispiele in Verbindung mit dem beiliegenden Fliesschema näher erläutert.

Beispiel 1

Zur Herstellung von Leichtbauplatten mit einer Rohdichte von 160 kg/m³ wurden folgende Ausgangsstoffe verwendet.

23 Gew.-% Quarzmehl
12 Gew.-% amorphes Siliciumdioxydmaterial, wobei seine Menge als $SiO_2$ ausgedrückt ist,*)
44 Gew.-% eissfeinkalk mit 91 Gew.-% reaktivem CaO oder dieselbe CaO-Äquivalentmenge Kalkhydrat
6 Gew.-% Calciumsilikat **)
7 Gew.-% Bentonit
5 Gew.-% Cellulosefasern
3 Gew.-% alkalibeständige Glasfasern.

*) in Form von Natrium- oder Kaliumsilikat, gefällter oder pyrogener Kieselsäure, Kieselgur oder hochdisperser Siliciumdioxydfüllstoffe, die als Nebenprodukte bei chemischen Verfahren anfallen und von amorpher Struktur sind.
**) Es wurde synthetisch hergestellt und nach der Autoklavenhärtung auf eine Korngrösse von kleiner als 1,5 mm, vorzugsweise kleiner als 0,5 mm, zerkleinert.

Es wurden das Quarzmehl aus einem Quarzmehlsilo 1, das Calciumsilikat aus einem Calciumsilikatbehälter 2, der Weissfeinkalk oder das Kalkhydrat aus einem Kalksilo 3 und der Bentonit aus einem Bentonitbehälter 6 über eine Vierkomponentenwaage 7 einem Intensivmischer 11 zugeführt. Diesem Intensivmischer 11 wurde auch Natriumsilikat aus einem Natriumsilikatlösungsbehälter 4 als wässrige Lösung über einen Dosierbehälter 5 zugeführt. Ferner wurde dem Intensivmischer 11 ein Faserbrei der angegebenen Fasern aus einem Dissolverbehälter 9, das heisst einem mit bei schonender Behandlung der Faserstoffe eine optimale Aufteilung der Fasern im Wasserüberschuss (in diesem Beispiel wurden 1 Gew.-Teil Feststoffe und 20 Gew.-Teile Wasser verwendet) herbeiführenden Zerkleinerungs- und Mischwerkzeugen versehenen Behälter, über einen Dosierbehälter 10 zugeführt. Die eingesetzten Faserstoffe, nämlich Cellulose und Glasfasern, wurden mit Hilfe des Dissolverbehälters 9 zu einem dünnen Brei aufbereitet, wobei kein Lösungsvorgang stattfand. Die Verwendung des Dissolverbehälters 9 ist für die Herstellung der Faserstoffdispersion erforderlich, um die Verteilung der so aufbereiteten Faserstoffe im Intensivmischer 11 zu gewährleisten und die Fasern durch den Mischarbeitsgang nicht zu zerstören. Schliesslich wurde dem Intensivmischer 11 aus einem Wasserbehälter 8 Wasser zugeführt. Im Intensivmischer 11 wurde eine dünnbreiige, gut pumpfähige Dispersion erzielt. Diese wurde nach abgeschlossener Aufbereitung in Reaktionsbehälter 12 gepumpt. In diesen bildete sich nach einer Reaktionszeit von etwa 12 Stunden die Gelstruktur optimal aus, wobei sich die Konsistenz so einstellte, dass die Pumpfähigkeit dieser Aufschlämmung unverändert erhalten blieb, was von besonderer Bedeutung ist.

Die Formgebung erfolgte in der Weise, dass ein bestimmtes Aufschlämmungsvolumen aus den Reaktionsbehältern 12 in einen Dosierbehälter 13 gepumpt wurde. Dieses Aufschlämmungsvolumen ergab sich aus dem Feststoffgehalt dieser Calciumsilikataufschlämmung, dem gewünschten Plattenvolumen und dem gewünschten Raumgewicht der herzustellenden Platte. Dieses im Dosierbehälter 13 bemessene Aufschlämmungsvolumen wurde in eine rechteckige Filterpressform 14 eingefüllt und gleichmässig auf deren Pressfläche verteilt (Füllstation A). Nach der Durchführung des Füllvorganges wurde die Filterpressform 14 von der Füllstation A mit Hilfe einer als umlaufende Filtersiebbandstrecke ausgebildeten Förderstation 15, auf welcher die Filterpressform 14 angeordnet wurde, durch Verfahren des Filtersiebbandes der Förderstation 15 um einen Arbeitstakt in die Filterpressstation B versetzt. In dieser erfolgte der Pressvorgang durch Absenken des oberen Teiles der Filterpressform 14, welcher einen gleichmässig verteilten Pressdruck auf die gesamte Pressfläche ausübte, mit beidseitiger Entwässerung. Das Filtersiebband der Förderstation 15 bot die Voraussetzung für das Abführen des auf der Boden- beziehungsweise Unterseite der Filterpressform 14 austretenden Filtrat- beziehungsweise Presswassers. Das auf der Bodenseite der Filterpressform 14 ausgetretene Filtratwasser lief von einer Auffangwanne 17 in einen Sammelbehälter 18. Das an der Oberseite der Filterpressform 14 ausgetretene Filtrat wurde vollständig abgesaugt und ebenfalls in den Sammelbehälter 18 entleert. Dieses Filtratwasser wurde in den Kreislauf zurückgeführt und einer neuen Ausgangsmischung zugesetzt. Die besondere Konstruktion der Filterpressform 14 ermöglichte die Herstellung von Platten mit Abmessungen von höchstens 3000 mm x 1250 mm und Dicken von 10 bis 100 mm, die nach bestimmten Rastermassen mittels einer Schneidevorrichtung in entsprechend kleinere Einheiten unterteilt werden konnten.

Nach abgeschlossenem Pressvorgang wurde die Platte beziehungsweise wurden mehrere kleinere Einheiten, die in ihrer Summe dem Maximalmass entsprachen, mittels einer vollflächig wirksamen Vakuumanlage 16, die mit einer Vakuumhaube, welche auf die gepresste Platte beziehungsweise die mehreren kleineren Einheiten abgesenkt wurde und vollflächig auflag, aus der Filterpressform 14 gehoben und mittels der Förderstation 15 auf eine speziell ausgebildete Horde 20 umgesetzt. Die Abmessungen der Vakuumsaugfläche entsprachen dem grössten Plattenpressmass und die Vakuumanlage 16 war in mehrere Kammern unterteilt, wodurch die Voraussetzung geschaffen wurde, um sowohl die einzelne Platte als auch ein Vielfaches entsprechend kleinerer Platteneinheiten von der Förderstation 15 abzuheben und auf die Horden 20 umzusetzen. Die Förderstation 15 hatte also die Aufgabe des Transportes der Filtrepressform 14 in die einzelnen Arbeitsstationen, die den gesamten Pressvorgang und das Umsetzen der Platten ausmachen.

Die Horden 20 waren als rechteckige Rahmenkonstruktion ausgebildet und mit einem gelochten Blech abgedeckt. Die mit Platten belegten Horden 20 wurden übereinandergestapelt. An den beiden Längsseiten der Horden 20 befanden sich je zwei auswechselbare Distanzstücke, so dass in Abhängigkeit von der jeweils gefertigten Plattendicke im übereinander gestapelten Hordenpaket 20 jeweils zwischen der Oberkante der Platte und der Unterkante der darüber befindlichen Horde 20 ein Freiraum von etwa 2 cm blieb. Es ist, insbesondere bei unterschiedlichen Plattendicken, zur optimalen Nutzung des Autoklavenvolumens und des Trockners von Bedeutung, dass die als Abstützung der übereinander gestapelten Horden 20 erforderlichen Distanzstücke entsprechend den variablen Plattendicken auswechselbar waren.

Die Horden 20 wurden mit Hilfe einer Seitentransportanlage 19 mittels einer Vakuumhaube derselben von der Förderstation 15 abgehoben und an seitlich zur Filterpressanlage angeordnete Hordenwagen 21 übergeben beziehungsweise auf diesen abgesetzt.

Die auf den Hordenwagen 21 gestapelten Horden 20 wurden zu einem Wagenzug zusammengestellt und in einen Autoklaven 22 eingefahren. Hier erfolgte die hydrothermale Härtung in einem Härtezyklus von etwa 10 Stunden.

Nach abgeschlossener Autoklavenhärtung wurden die Hordenwagen 21 in einen Trockner 23 eingefahren und bei etwa 140°C bis zur Erreichung einer Restfeuchte von etwa 6 bis 10% getrocknet.

Die getrockneten Platten wurden aus dem Trockner 23 ausgefahren und mit Hilfe einer der Seitentransportanlage 19 ähnlichen Entstapelanlage mit einer Vakuumhaube von den Horden 22 abgehoben und auf Platten umgesetzt und übereinandergestapelt. Die Plattenpakete 24 wurden mit Folie verpackt und waren versandfertig.

Die durchschnittlichen Materialparameterwerte der erhaltenen Leichtbauplatten waren wie folgt (hier und im folgenden bedeuten die internationale Dimension N/mm² [Newton/Quadratmillimeter] = 10 kp/cm² und die internationale Dimension W/mK [Watt/Meter · Kelvin] =

$$= \frac{kcal}{m \quad Stunde \quad °C} \times 1,163):$$

| | |
|---|---|
| Druckfestigkeit in N/mm² | 1,5 |
| Biegefestigkeit in N/mm² | 1,0 |
| Schwindung bei 750°C in % | 1,2 |
| Schwindung bei 950°C in % | 1,6 |
| Wärmeleitzahl in W/mK | 0,040 |

Das Verhältnis der Biegefestigkeit zur Druckfestigkeit der wie vorstehend beschrieben erfindungsgemäss hergestellten Leichtbauplatten war also 2:3. Ohne den erfindungsgemäss verwendeten Zusatz von synthetisch hergestelltem Calciumsilikatgranulat beziehungsweise -pulver betrug bei den erhaltenen Leichtbauplatten das Verhältnis der Biegefestigkeit zur Druckfestigkeit nur 1:3.

Dabei wurde bei den erfindungsgemäss hergestellten Leichtbauplatten das obige günstige Verhältnis der Biegefestigkeit zur Druckfestigkeit ohne Verwendung von Asbestfasern erreicht. Sie waren toxikologisch unbedenklich und nicht brennbar, wobei sie der Bauklasse A nach DIN 4102 entsprachen.

Beispiel 2

Es wurde das Beispiel 1 mit dem Unterschied wiederholt, dass zur Herstellung von Leichtbauplatten mit einer Rohdichte von 500 kg/m³ folgende Ausgangsstoffe verwendet wurden.

| | |
|---|---|
| 31 Gew.-% | Quarzmehl |
| 9 Gew.-% | amorphes Siliciumdioxydmaterial, wobei seine Menge als $SiO_2$ ausgedrückt ist,*) |
| 37 Gew.-% | Weissfeinkalk mit 91% reaktivem CaO oder dieselbe CaO-Äquivalentmenge Kalkhydrat 12 Gew.-%Calciumsilikat **) |
| 3 Gew.-% | Bentonit |
| 4 Gew.-% | Cellulosefasern |
| 4 Gew.-% | alkalibeständige Glasfasern |

*) die entsprechende Bemerkung des Beispiels 1 gilt auch hier.
**) die entsprechende Bemerkung des Beispiels 1 gilt auch hier.

In diesem Falle bildete sich nach einer Reaktionszeit von etwa 6 Stunden die optimale Gelstruktur aus.

Die durchschnittlichen Materialparameterwerte der erhaltenen Leichtbauplatten waren wie folgt:

| | |
|---|---|
| Druckfestigkeit in N/mm² | 7,5 |
| Biegefestigkeit in N/mm² | 6,5 |
| Schwindung bei 750°C in % | 1,2 |
| Schwindung bei 950°C in % | 1,5 |
| Wärmeleitzahl in W/mK | 0,105 |

Das Verhältnis der Biegefestigkeit zur Druckfestigkeit der wie vorstehend beschrieben erfindungsgemäss hergestellten Leichtbauplatten war also 2,6:3. Ohne den erfindungsgemäss verwendeten Zusatz von synthetisch hergestelltem Calciumsilikatgranulat beziehungsweise -pulver betrug bei den erhaltenen Leichtbauplatten das Verhältnis der Biegefestigkeit zur Druckfestigkeit nur 1:5.

Dabei wurde bei den erfindungsgemäss hergestellten Leichtbauplatten das obige günstige Verhältnis der Biegefestigkeit zur Druckfestigkeit wiederum ohne Verwendung von Asbestfasern erreicht. Auch sie waren toxikologisch unbedenklich und nicht brennbar, wobei sie der Bauklasse A nach DIN 4102 entsprachen.

Beispiel 3

Es wurde das Beispiel 1 mit dem Unterschied wiederholt, dass zur Herstellung von Leichtbauplatten mit einer Rohdichte von 80 kg/m³ folgende Ausgangsstoffe verwendet wurden.

30 Gew.-%    Quarzmehl

6 Gew.-%    amorphes Siliciumdioxydmaterial, wobei seine Menge als $SiO_2$ ausgedrückt ist,*)

35,5 Gew.-%   Weissfeinkalk mit 91% reaktivem CaO oder dieselbe CaO-Äquivalentmenge Kalkhydrat

20 Gew.-%    Calciumsilicat **)

0,5 Gew.-%    Bentonit

2 Gew.-%    Cellulosefasern

6 Gew.-%    alkalibeständige Glasfasern.

*) die entsprechende Bemerkung des Beispiels 1 gilt auch hier.

**) die entsprechende Bemerkung des Beispiels 1 gilt auch hier.

In diesem Falle bildete sich nach einer Reaktionszeit von etwa 5 Stunden die optimale Gelstruktur aus.

Die durchschnittlichen Materialparameterwerte der erhaltenen Leichtbauplatten waren wie folgt:

| | |
|---|---|
| Druckfestigkeit in N/mm² | 11,4 |
| Biegefestigkeit in N/mm² | 9,7 |
| Schwindung bei 750°C in % | 1,0 |
| Schwindung bei 950°C in % | 1,3 |
| Wärmeleitzahl in W/mK | 0,135 |

Das Verhältnis der Biegefestigkeit zur Druckfestigkeit der wie vorstehend beschrieben erfindungsgemäss hergestellten Leichtbauplatten war also 2,55:3. Ohne den erfindungsgemäss verwendeten Zusatz von synthetisch hergestelltem Calciumsilikatgranulat beziehungsweise -pulver betrug bei den erhaltenen Leichtbauplatten das Verhältnis der Biegefestigkeit zur Druckfestigkeit nur 1:5.

Dabei wurde bei den erfindungsgemäss hergestellten Leichtbauplatten das obige günstige Verhältnis der Biegefestigkeit zur Druckfestigkeit wiederum ohne Verwendung von Asbestfasern erreicht. Auch sie waren toxikologisch unbedenklich und nicht brennbar, wobei sie der Bauklasse A nach DIN 4102 entsprachen.

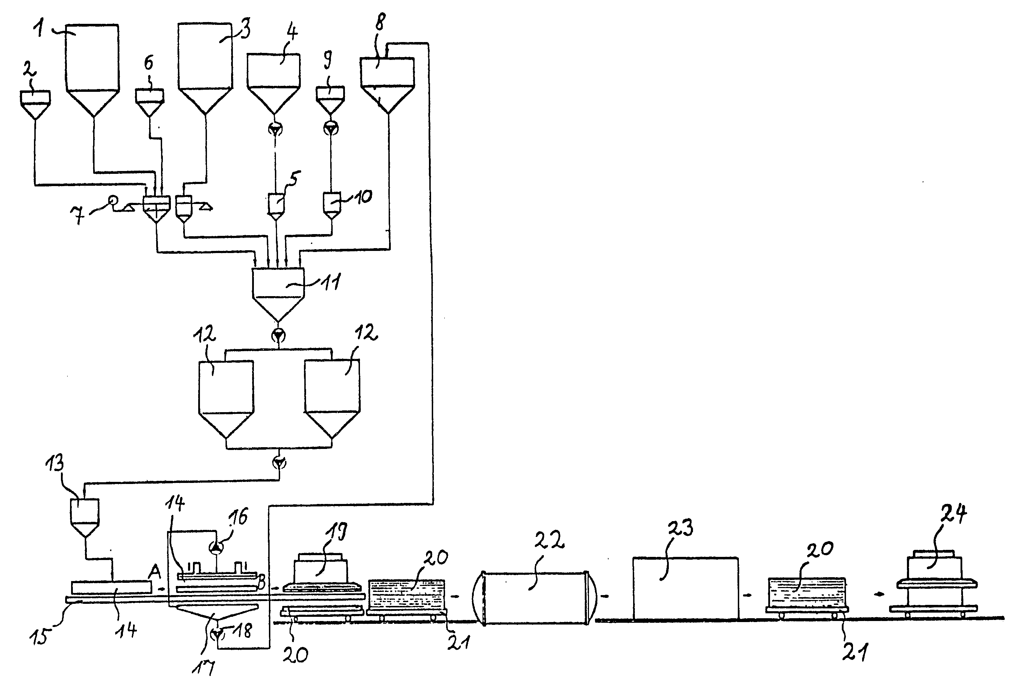

**Patentansprüche**

1. Verfahren zur Herstellung von feuerbeständigen massgenauen Leichtbauplatten mit einer Rohdichte von etwa 160 kg/m³ bis 800 kg/m³ auf der Grundlage von faserverstärkten Calciumsilikatmassen durch Umsetzen von amorphem und kristallinem Siliciumdioxyd beziehungsweise diese enthaltenden Materialien mit Calciumoxid beziehungsweise dieses enthaltenden Materialien in einem Molverhältnis von CaO zu $SiO_2$ von 0,8:1 bis 1,1:1 unter Zusatz von synthetischen Calciumsilikaten und Einarbeiten von toxikologisch unbedenklichen Faserstoffen in Gegenwart von Wasser und unter Entwässern erfolgendes Formen und Autoklavenhärten, dadurch gekennzeichnet, dass man der CaO-$SiO_2$-Ausgangsmischung ein synthetisch hergestelltes Calciumsilikatgranulat beziehungsweise -pulver mit einem Molverhältnis von CaO zu $SiO_2$ von 0,8:1 bis 1,1:1 zusetzt und die Umsetzung zur langsamen Ausbildung der Gelstruktur vor dem Formen (Vorreaktion) ohne äussere Wärmeanwendung in einer zur gewünschten Rohdichte der herzustellenden Leichtbauplatten in umgekehrter Funktion stehenden Mindestzeit von mindestens 5 Stunden im Falle der Herstellung von einer Rohdichte von 800 kg/m³ aufweisenden Leichtbauplatte bis mindestens 12 Stunden im Falle der Herstellung von einer Rohdichte von 160 kg/m³ aufweisenden Leichtbauplatte steigend durchgeführt.

2. Verfahren nach Anspruch 1, dadurch gekennzeichnet, dass man als synthetisches Calciumsilikatgranulat beziehungsweise -pulver ein solches, welches aus amorphem und/oder kristallinem Siliciumdioxyd und Kalk, insbesondere Quarzmehl und Weissfeinkalk zweckmässig unter Zusatz von Mikroporenbildnern, durch Autoklavenhärtung hergestellt worden ist, verwendet.

3. Verfahren nach Anspruch 1 oder 2, dadurch gekennzeichnet, dass man das synthetische Calciumsilikat in einer Menge von 6 bis 20 Gew.-%, bezogen auf das Ausgangsgemisch, zusetzt.

4. Verfahren nach Anspruch 1 bis 3, dadurch gekennzeichnet, dass man als amorphes Siliciumdioxyd hochquellfähige Tonmineralien und/oder Natrium- und/oder Kaliumsilikatlösungen und/oder Kieselgur und/oder Reisschalenasche und/oder pyrogene und/oder gefällte Kieselsäure und/oder amorphes Siliciumdioxyd enthaltende industrielle Nebenprodukte, insbesondere hochprozentigen Kieselsäurestaub der Ferrosiliciumerzeugung, in zur Erzielung der gewünschten Rohdichte bei Entfernung des Überschusswassers erforderlichen Menge verwendet.

5. Verfahren nach Anspruch 1 bis 4, dadurch gekennzeichnet, dass man das amorphe Siliciumdioxyd in einem Anteil von mindestens 4 Gew.-%, bezogen auf das gesamte eingesetzte Siliciumdioxyd, verwendet.

6. Verfahren nach Anspruch 1 bis 5, dadurch gekennzeichnet, dass man die hochquellfähigen Tonmineralien in einer Menge von 0,5 bis 7 Gew.-%, insbesondere 1 bis 5 Gew.-%, bezogen auf das Ausgangsgemisch, zusetzt.

7. Verfahren nach Anspruch 1 bis 6, dadurch gekennzeichnet, dass man als hochquellfähige Tonmineralien dreischichtige Tonmineralien verwendet.

8. Verfahren nach Anspruch 1 bis 7, dadurch gekennzeichnet, dass man die Aufbereitung des Rohstoffgemisches mit einem zur Erzielung einer 8 bis 12% Feststoffe enthaltenden Dispersion erforderlichen Wasserüberschuss durchführt.

9. Verfahren nach Anspruch 1 bis 8, dadurch gekennzeichnet, dass man das Entwässern zum Entfernen des überschüssigen Wassers in einer Filterpresse durchführt und die erhaltenen stabilen plattenförmigen Formkörper mit extrem niedriger Rohdichte im plastischen Zustand mittels Trennscheiben in kleinere Formen unterteilt.

10. Verfahren nach Anspruch 1 bis 9, dadurch gekennzeichnet, dass man mit einer Filterpressform mit beidseitiger und entsprechend den Filterpressformmassen ganzflächiger Entwässerung arbeitet, wobei man das auf der Oberseite austretende Filtratwasser mittels Vakuum absaugt.

11. Verfahren nach Anspruch 1 bis 10, dadurch gekennzeichnet, dass man einen stufenlos regelbaren Pressdruck von 0,15 MPa bis 0,75 MPa anwendet und die geformte Platte aus der Filterpresse heraus mit Vakuum bei vollflächiger Vakuumbeanspruchung umsetzt.

12. Verfahren nach Anspruch 1 bis 11, dadurch gekennzeichnet, dass man materialgleiche Verbundelemente mit einer dünnwandigen äusseren Deckschicht mit einer Rohdichte von 300 bis 800 kg/m³ und einer darauf geschichteten Wärmedämmzone mit einer Rohdichte von 160 bis 300 kg/m³ formt, wobei man den Haftverbund durch chemische Reaktion unter den Bedingungen der hydrothermalen Autoklavenbehandlung durch materialgleiche C-S-H-Phasen bildet.

## Claims

1. A process for the production of fire proof light-weight plates true to size having a gross density of from about 160 kg/m³ to 800 kg/m³ on the basis of fibrereinforced calcium silicate compositions by reacting amorphous and crystalline silicium dioxide or materials containing these, respectively, with calcium oxide or materials containing this, respectively, in a molar ratio of CaO to $SiO_2$ of 0.8:1 to 1.1:1 with adding synthetic calcium silicate and incorporating toxicologically unobjectionable fibre materials in the presence of water and by shaping carried out with dewatering and autoclave indurating, characterized in that one add to the $CaO$-$SiO_2$ starting mixture a synthetically prepared calcium silicate granulate or powder, respectively, having a molar ratio of CaO to $SiO_2$ of 0.8:1 to 1.1:1 and one carries out the reaction for the slow development of the gel structure before the shaping (pre-reaction) without external application of heat in a minimum time being in an inverse function relationship to the desired gross density of the light-weight plates to be produced of at least 5 hours in case of the production of light-weight plates having a gross density of 800 kg/m³ increasing to at least 12 hours in case of the production of light-weight plates having a gross density of 160 kg/m³.

2. A process according to claim 1, characterized in that one uses as synthetic calcium silicate granulate or powder, respectively, one which has been prepared from amorphous and/or crystalline silicium dioxide and lime, particularly quartz flour and white fine lime, suitably with the addition of agents forming micropores, by autoclave induration.

3. A process according to claim 1 or 2, characterized in that one adds the synthetic calcium silicate in an amount of from 6 to 20% by weight, calculated on the starting mixture.

4. A process according to claims 1 to 3, characterized in that one uses as amorphous silicium dioxide clay minerals of high swelling capacity and/or solutions of sodium and/or potassium silicate and/or diatomaceous earth and/or ash of rices hells and/or pyrogenic and/or precipitated silica and/or industrial by-products containing amorphous silicium dioxide, particularly silica dust of high percentage from the production of ferrosilicon in an amount necessary to obtain the desired gross density when eliminating the excess water.

5. A process according to claims 1 to 4, characterized in that one uses the amorphous silicium dioxide in an amount of at least 4% by weight, calculated on the entire silicium dioxide employed.

6. A process according to claims 1 to 5, characterized in that one adds the clay minerals of high swelling capacity in an amount of from 0.5 to 7% by weight, particularly from 1 to 5% by weight, calculated on the starting mixture.

7. A process according to claims 1 to 6, characterized in that one uses a clay minerals of high swelling capacity three-layer clay minerals.

8. A process according to claims 1 to 7, characterized in that one carries out the preparation of the raw material mixture with an excess of water necessary to obtain a dispersion containing from 8 to 12% of solids.

9. A process according to claims 1 to 8, characterized in that one carries out the dewatering for removing the excess water in a filter press and subdivides the obtained stable plate-sheped bodies having an extremely low gross density in the plastic state by means of separating disks into smaller sizes.

10. A process according to claims 1 to 9, characterized in that one works with a filter press mould with dewatering on both sides and on the entire surface corresponding to the dimensions of the filter press mould sucking off the filtrate water issuing on the upper side by means of vacuum.

11. A process according to claims 1 to 10, characterized in that one applies an infinitely variable moulding pressure of from 0.15 MPa to 0.75 MPa and transposes the shaped plate out of the filter press by vacuum in applying the latter to the entire surface.

12. A process according to claims 1 to 11, characterized in that one shapes composite elements of the same material and having a thin-walled exterior cover layer with a gross density of from 300 to 800 kg/m³ and a heat-insulating zone superposed to the former forming the adhesive bound by chemical reaction under the conditions of the hydrothermal autoclave treatment by C-S-H-phases of the same material.

## Revendications

1. Procédé pour la fabrication de plaques de construction légères de dimensions précises réfractaires ayant une densité à l'état brut comprise environ entre 160 et 800 kg/m³ à base de compositions de silicate de calcium renforcées par des fibres, selon lequel on fait d'abord réagir de la silice amorphe et cristalline ou des matières les contenant, avec de l'oxyde de calcium ou des matières le contenant, en respectant un rapport molaire CaO/SiO₂ compris entre 0,8/1 et 1,1/1, et en ajoutant silicates de calcium synthétiques et incorporant des matières fibreuses irréprochables au point de vue toxicologique en présence d'eau, et ensuite on met en forme en déshydratant et on fait durcir dans un autoclave, caractérisé en ce que l'on ajoute au mélange de départ un additif supplémentaire constitué de granules ou de poudre de silicate de calcium, fabriqué par synthèse, dans lequel le CaO et le SiO₂ sont présents dans un rapport molaire compris entre 0,8/1 et 1,1/1, et pour le lent développement de la structure de gel on effectue la réaction avant la mise en forme (réaction préalable) sans apport thermique externe en un intervalle de temps minimal qui est inversement proportionnel à la densité à l'état brut recherché de la plaque de construction légère à fabriquer, et qui va en augmentant d'au moins 5 h dans le cas de fabrication de plaques de construction ayant une densité à l'état brut de 800 kg/m³, à jusqu'au moins 12 h dans le cas de fabrication de plaques de construction ayant une densité à l'état brut de 160 kg/m³.

2. Procédé selon la revendication 1, caractérisé en ce que l'on utilise un silicate de calcium synthétique granulé ou en poudre, fabriqué à partir de silice amorphe et/ou cristalline et de chaux, en particulier à partir de farine de quartz et de chaux blanche fine, et avantageusement avec addition de formateurs de micropores, par durcissement dans un autoclave.

3. Procédé selon la revendication 1 ou 2, caractérisé en ce que le silicate de calcium synthétique est ajouté en une proportion comprise entre 6 et 20% en poids, calculée par rapport au mélange de départ.

4. Procédé selon l'une quelconque des revendications 1 à 3, caractérisé en ce que l'on utilise comme silice amorphe des minéraux argileux à haut pouvoir de gonflement et/ou des solutions de silicate de sodium et/ou de potassium et/ou de la diatomite et/ou des cendres de coques de riz et/ou de l'acide silique pyrogène et/ou précipité et/ou des produits industriels secondaires contenant de la silice amorphe, en particulier la poussière d'acide silique à haute teneur provenant de la fabrication de ferrosilicium, en une quantité suffisante pour obtenir la densité à l'état brut désirée après élimination de l'eau en excès.

5. Procédé selon l'une quelconque des revendications 1 à 4, caractérisé en ce que l'on utilise la silice amorphe en une proportion d'au moins 4% en poids par rapport à la totalité de la silice mise en œuvre.

6. Procédé selon l'une quelconque des revendications 1 à 5, caractérisé en ce que l'on ajoute les minéraux argileux à haut pouvoir de gonflement en une proportion comprise entre 0,5 et 7% en poids, en particulier entre 1 et 5% en poids, calculée par rapport au mélange de départ.

7. Procédé selon l'une quelconque des revendications 1 à 6, caractérisé en ce que l'on utilise en tant que minéraux argileux à haut pouvoir de gonflement des minéraux à trois strates.

8. Procédé selon l'une quelconque des revendications 1 à 7, caractérisé en ce que la préparation du mélange de matières de départ est effectuée avec un excès d'eau nécessaire pour obtenir une dispersion contenant de 8 à 12% de matières solides.

9. Procédé selon l'une quelconque des revendications 1 à 8, caractérisé en ce que l'excès d'eau est éliminé dans une presse à filtres et en ce que les pièces stables en forme de plaques obtenues ayant une très faible densité à l'état brut sont débitées à l'état plastique à l'aide de disques de découpage pour obtenir des plaques de dimensions plus petites.

10. Procédé selon l'une quelconque des revendications 1 à 9, caractérisé en ce que l'on effectue l'élimination de l'eau à l'aide d'une presse de mise en forme à filtres assurant une déshydration bilatérale sur toute la surface correspondant aux dimensions de la presse de mise en forme à filtres, et en ce que l'eau de filtration qui se réunit à la surface supérieure est écartée par succion sous vide.

11. Procédé selon l'une quelconque des revendications 1 à 10, caractérisé en ce que l'on applique une force de pressage réglable en continu comprise entre 0,15 et 0,75 MPa, et en ce que la plaque formée est enlevée de la presse à filtres à l'aide d'un vide appliqué sur la surface entière.

12. Procédé selon l'une quelconque des revendications 1 à 11, caractérisé en ce que l'on forme des éléments composites de matières identiques ayant une couche de revêtement mince extérieure, d'une densité à l'état brut comprise entre 300 et 800 kg/m³ et sur celle-ci une autre couche d'isolement thermique ayant une densité à l'état brut comprise entre 160 et 300 kg/m³, la force de liaison étant obtenue par une réaction chimique dans les conditions du traitement hydrothermique dans l'autoclave au moyen de phases C-S-H de matières identiques.